# EUROPEAN PATENT SPECIFICATION

(11) **EP 3 541 854 B1**
(45) Date of publication and mention of the grant of the patent: **21.10.2020**
(21) Application number: 17800799.3
(22) Date of filing: 09.11.2017
(51) Int. Cl.: C08F 2/22, C08F 4/40

(54) **A SYNERGISTICALLY ACTIVE COMPOSITION**
SYNERGISTISCH AKTIVE ZUSAMMENSETZUNG
COMPOSITION ACTIVE DE MANIÈRE SYNERGIQUE

(30) Priority: 15.11.2016 EP 16198777
(43) Date of publication of application: 25.09.2019
(73) Proprietor: L. Brüggemann GmbH & Co. KG, 74076 Heilbronn (DE)
(72) Inventor: BERGHOFER, Josef, 97941 Tauberbischofsheim (DE); MARK, Stefan, 74906 Bad Rappenau (DE); ENDERLE, Stefanie, 71723 Großbottwar (DE); WOLFF, Simone, 74080 Heilbronn (DE)
(74) Representative: Reitstötter Kinzebach
(86) International application number: PCT/EP2017/078748
(87) International publication number: WO 2018/091348

(56) References cited:
- EP-A2- 1 520 865
- WO-A1-99/18067
- US-A- 4 227 881
- US-A1- 2013 121 943

## Description

The invention relates to the use of a synergistically active composition which comprises at least one metal sulfite and at least one metal hydroxymethane sulfinate as reducing agent in emulsion polymerizations.

### BACKGROUND

Formaldehyde sulfoxylates (hydroxymethane sulfinates), in particular sodium formaldehyde sulfoxylate, have proven to be effective and good value reducing agents, in particular in free-radical-initiated emulsion polymerizations. During the reduction process, however, the formaldehyde sulfoxylates eliminate the toxic formaldehyde. Plastics or polymer dispersions which must not contain formaldehyde are polymerized using alternative reducing agents, for example, bisulfites, ascorbic acid, isoascorbic acid or sodium erythrobate. Since the formaldehyde-free reducing agents are weaker reducing agents, the disadvantage of less complete polymerization compared with formaldehyde sulfoxylates has to be accepted. Moreover, an increased coagulate formation and yellowing is observed with said alternative reducing agents.

The disadvantages of the formaldehyde sulfoxylates have been overcome by the sulfinic acid derivatives which additionally have a carboxylic acid group in the molecule. These derivatives are disclosed in WO 99/18067 and because they have a high reducing power and stability and do not release formaldehyde during or after use they are in wide-spread use as reducing agents, in particular in free-radical-initiated emulsion polymerizations. However, said derivatives are too expensive for a number of applications.

US 4,227,881 relates to a stripping process for removing dye from dyed fabrics. The process is carried out with sodium hydroxymethane sulfinate in the presence of ammonium cations and sulfite anions. The ammonium ions are essential to achieve the desired effect. US 2013/0121943 A1 discloses a polymeric thickener and EP 1 520 865 discloses an emulsion containing an acrylic polymer. The thickener and the acrylic polymer are prepared by emulsion polymerization using conventional oxidizing agents as polymerization initiators and suitable reducing agents.

### SUMMARY OF THE INVENTION

The problem underlying the present invention is therefore to provide a low cost reducing agent for use in emulsion polymerizations which exhibits an increased reducing power and reduced formaldehyde emission.

This problem has been solved by using a mixture of a metal sulfite and a metal hydroxymethane sulfinate. It was surprisingly found that this mixture of two reducing agents exhibits a synergistic effect, i.e. the reducing power of the mixture is higher than that of the equivalent amount of the single reducing agents.

The invention therefore relates to the use of a composition comprising at least one metal sulfite and at least one metal hydroxymethane sulfinate as reducing agent in emulsion polymerizations.

### BRIEF DESCRIPTION OF THE DRAWING

Fig. 1 shows the residual monomer content for n-butylacrylate after a 15 min. treatment.
Fig. 2 shows the residual monomer content for n-butylacrylate after a 30 min. treatment.
Fig. 3 shows the residual monomer content for n-butylacrylate after a 45 min. treatment.
Fig. 4 shows the residual monomer content for n-butylacrylate after a 60 min. treatment.
Fig. 5 shows the residual monomer content for styrene after a 15 min. treatment.
Fig. 6 shows the residual monomer content for styrene after a 30 min. treatment.
Fig. 7 shows the residual monomer content for styrene after a 45 min. treatment.
Fig. 8 shows the residual monomer content for styrene after a 60 min. treatment.

### DETAILED DESCRIPTION OF THE INVENTION

The synergistic effect is seen in a broad mixing ratio of metal sulfite to metal hydroxymethane sulfinate on weight basis such as 10:1 to 1:10. The composition is particularly effective in a weight ratio of metal sulfite to metal hydroxymethane sulfinate in the range of 5:1 to 1:4, preferably 4:1 to 1:3 and more preferably 3:1 to 1:3 or 3:1 to 1: 2.8.

In one embodiment the metal sulfite is selected from an alkali metal sulfite, an alkaline earth metal sulfite, zinc sulfite, iron-(II)-sulfite, aluminum sulfite and mixtures thereof. In particular the metal sulfite is selected from lithium, sodium, potassium magnesium, calcium, zinc, iron-(II)-sulfite, aluminum sulfite and mixtures thereof. Sodium sulfite is preferred.

In another embodiment the metal hydroxymethane sulfinate is selected from an alkali metal, an alkaline earth metal, zinc, iron-(II), aluminum hydroxymethane sulfinate and mixtures thereof. In particular the metal hydroxymethane sulfinate is selected from lithium, sodium, potassium, magnesium, calcium, zinc, iron-(II), aluminum hydroxymethane sulfinate and mixtures thereof. Sodium hydroxymethane sulfinate is preferred.

In another embodiment the composition is essentially free of an ammonium salt, such as ammonium sulfate, ammonium chloride etc. "Essentially free" as used herein means that the amount of ammonium salt is ≤ 10 wt.-%, preferably ≤ 5 wt.-% or 1 wt.-% and in particular free of an ammonium salt, based on the sum of the weight of the metal sulfite and metal hydroxymethane sulfinate.

The composition of the invention may be provided as a solid mixture which is storage stable for a long period of time. Even after a storage time of 6 months the reducing power of the composition is substantially unchanged. The water content of the solid mixture is, in general, in the range of 0.1 to 3 wt-%, based on dry solids.

In an embodiment, the solid mixture is provided in compacted form, in particular in form of granules. The granules may have an average particle size up to 3 mm. Preferred are minigranules (average particle size from 1mm to 2 mm) and particularly preferred are microgranules (average particle size from 200 µm to <1 mm).

For use the composition may be applied in solid form or as an aqueous solution which may be freshly prepared. For example, the aqueous solution may comprise 1 to 30 wt.%, preferably 1 to 10 wt.%, of the composition, based on the total weight of the solution.

In an embodiment, the composition of the invention comprises additional reducing agents such as ascorbic acid, isoascorbic acid or salts of these acids, acetone bisulfite, a metal hydroxymethane sulfonate (the metal is as defined above for the hydroxymethane sulfinate) etc.

In a further embodiment, the composition of the invention comprises conventional additives and auxiliaries, such as other metal salts like a metal sulfate (the metal is as defined above for the metal sulfite).

The amount of additional reducing agents and/or conventional additives and/or auxiliaries is, in general, less than 30 wt.%, based on the total weight of the composition (solids). Thus, the composition of the invention comprises at least 70 wt. %, in particular at least 80 wt. %, of the mixture of metal sulfite and the metal hydroxymethane sulfinate, based on the total weight of the solid mixture.

The composition of the invention can be prepared by mixing the components in the desired mixing ratio.

The compositions of the invention are reducing agents whose reducing action is higher than that of formaldehyde sulfoxylate. They have the further advantage over formaldehyde sulfoxylate of eliminating less formaldehyde before, during and after use. As compared to ascorbic and isoascorbic acid, they have the advantage of a higher reducing power and that they do not result in a yellowing of the polymer or other product. The compositions of the invention are thus preferentially used as reducing agents (co-initiators) in emulsion polymerizations together with conventional polymerization initiators, in order to allow the polymerization to be carried out at a lower temperature. Conventional polymerization initiators are primarily those of the peroxy and/or azo type. Suitable peroxy initiators are, for example, hydrogen peroxide, hydroperoxides, such as peracetic acid, perbenzoic acid and t-butylhydroperoxide, organic and inorganic peroxides such as di-t-butylperoxide, dibenzoylperoxide, potassium persulfate, sodium persulfate and sodium perphosphate, as well as azobisisobutyronitrile and 2,2'-azobis-2,4-dimethylvaleronitril. Preferably, the compositions are used as co-initiators in emulsion polymerizations together with peroxy (peroxidic) initiators.The compositions of the invention may, if desired, be also used together with oxidizable metal ions, such as Fe²⁺, Mn²⁺ etc. Preferably, the compositions of the invention are used as reducing agents in the post-polymerization of an emulsion polymer (preferably those where a peroxy (peroxidic) initiator is used) in order to reduce the residual monomer content to an acceptable level.

The examples below illustrate the invention without limiting it.

To demonstrate the synergistic effect of the compositions of the invention a styrene-n-butylacrylate latex emulsion (Liocryl XAS 4727 obtained from Synthopol Chemie GmbH & Co. KG) was used. Styrene and n-butylacrylate monomers were added to the latex emulsion to a final content of 5000 ppm each (based on latex emulsion) and homogenized. 350 g of the latex emulsion were charged into a vessel and the temperature thereof was regulated to 60 °C using a thermostat. The following mixtures of reducing agents given in table 1 below were prepared:

**Table 1**

| | **Sodium hydroxymethane sulfinate (%)** | **Natriumsulfit (%)** |
|---|---|---|
| **RM 1** | 0 | 100 |
| **RM 2** | 25 | 75 |
| **RM 3** | 50 | 50 |
| **RM 4** | 75 | 25 |
| **RM 5** | 100 | 0 |

| | | |
|---|---|---|
| RM: Reaction Mixture | | |

Each of these mixtures was added in a separate experiment to the latex emulsion at 60°C in an amount of 0.1 wt.%, based on the total weight of the latex emulsion. Simultaneously, the oxidation agent, tert.-butylhydroperoxide (tBHP), was added to the latex emulsion at 60°C in an amount of 0.1 wt.%, based on the total weight of the latex emulsion. The addition rate and the concentration of the reducing agent mixtures and of the oxidation agent is given in table 2 below:

**Table 2**

| | **Amount to be added in 60 min** | **Addition rate** |
|---|---|---|
| **0.1 % reducing agent (10 g RM per 250 mL water)** | 8.75 mL | 0.146 mL/min |
| **0.1 % oxidation agent (5.5 g 1BHP (70 %) per 250 mL water)** | 22.72 mL | 0.378 mL/min |

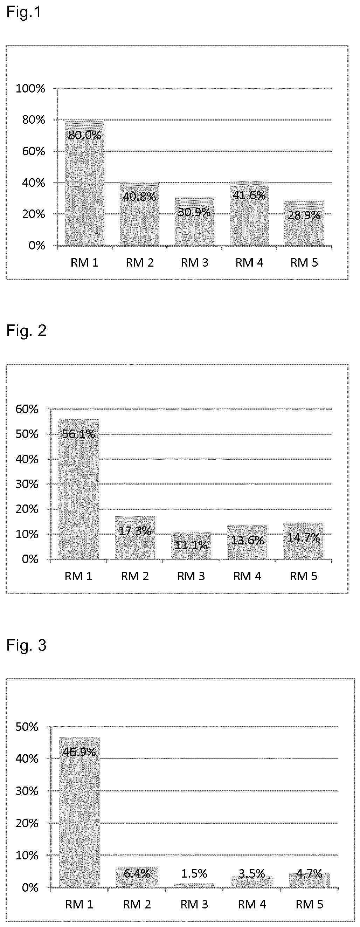

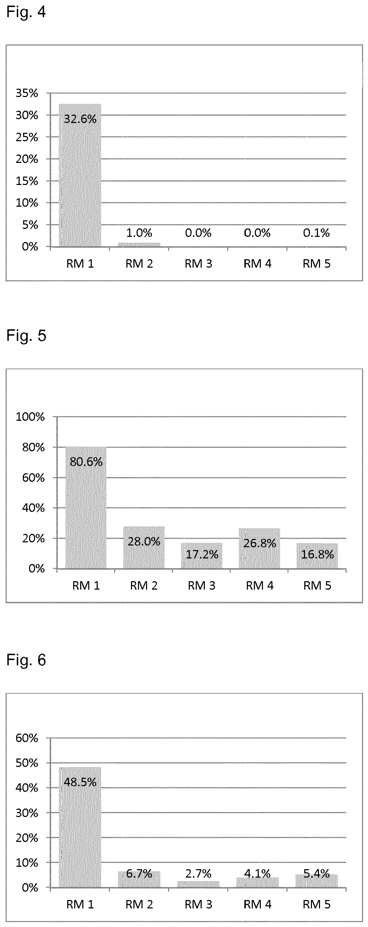

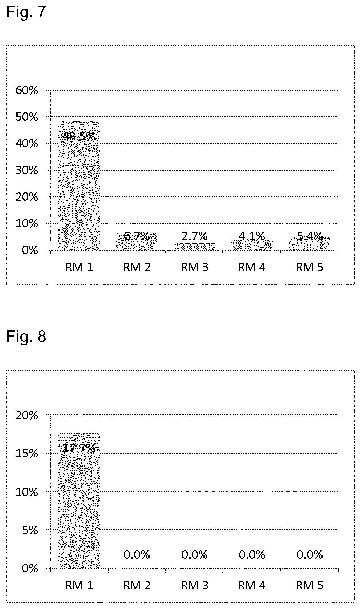

Samples were taken from the flask at times 0, 15 min, 30 min, 45 min and 60 min and the residual monomer content was determined as follows:
A Headspace-GC-MS of Perkin Elmer with Headspace-Autosampler and the Multiple Headspace Extraction method were used for determining the residual monomer content. The results for residual n-butylacrylate are shown in figures 1 to 4 and the results for residual styrene are shown in figures 5 to 8.

The figures show a synergistic effect as the residual monomer content for the compositions of the invention is well below the additive values which are on a straight line drawn from the value for RM1 to the value for RM5. In figures 1 and 5 the values for reaction mixture 4 (RM 4) are on said line or slightly below. This is because in these cases the system was not yet fully equilibrated and stabilized. With progressing time the equilibration and stabilization becomes sufficient so that a clear synergistic effect is seen, as demonstrated by figures 2 to 4 and 6 to 8. The synergistic effect is highly surprising when considering that a sulfite has a much lower reducing power than a hydroxymethane sulfinate. Consequently, one would expect that the reducing power of a hydroxymethane sulfinate would be reduced when mixing it with a sulfite. By contrast, however, the reducing power is actually increased in such a mixture.

### Determination of free formaldehyde

From each post-polymerization test sample 4 (after 60 min.) was analyzed to demonstrate that the concentration of free formaldehyde is the lower the higher the proportion of sulfite is in the composition of the invention. The analysis was carried out by means of HPLC using acetonitrile as solvent and a UV/VIS as detector. For this purpose about 2.5 g of the latex to be analyzed were weighed into an Erlenmeyer flask. Subsequently, about 80 ml of water were added and the mixture was heated to 40 °C for 60 min. The polymer was precipitated by adding 1 ml of a potassium hexacyanoferrate (III) solution (15 g/100 ml) and 1 ml of a zinc sulfate heptahydrate solution (30 g/100 ml). After cooling to room temperature the flask was filled with water up to the mark. The turbid solution was then filtered using a folded filter.

A 10 ml flask was charged with 4 ml acetonitrile and 0.5 ml 2,4-dinitrophenylhydrazine solution. 2 ml from the clear latex filtrate were added and the flask was filled with water up to the mark. The mixture was again filtered and used for HPLC analysis (two determinations per sample). The results are given in table 3 below:

**Table 3: Contribution to free formaldehyde (ppm) by redox system.**

| | **RM 1 (ppm)** | **RM 2 (ppm)** | **RM 3 (ppm)** | **RM 4 (ppm)** | **RM 5** |
|---|---|---|---|---|---|
| **Determination 1** | 0 | 34.7 | 66.6 | 105.7 | 140.5 |
| **Determination 2** | 0 | 37.1 | 66.2 | 104.9 | 145.3 |
| **Average 1 + 2:** | 0 | 35.9 | 66.4 | 104.9 | 142.9 |

Table 2 shows that the content of free formaldehyde is significantly reduced when using the compositions of the invention as reducing agent. Thus, the compositions of the invention allow to specifically tailor the formaldehyde content to the requirements by using the appropriate mixture of sulfite and hydroxymethane sulfinate and yet achieve an improved reduction of the monomer content in post-polymerizations.

## Claims

1. The use of a composition comprising at least one metal sulfite and at least one metal hydroxymethane sulfinate wherein the weight ratio of metal sulfite to metal hydroxymethane sulfinate is in the range of 10:1 to 1:10, as reducing agent in emulsion polymerizations.

2. The use of claim 1, wherein the metal sulfite is selected from the group of alkali metal, alkaline earth metal, zinc, iron and aluminum sulfite, in particular alkali metal and alkaline earth metal sulfite and mixtures thereof.

3. The use of claim 1 or 2, wherein the metal hydroxy methane sulfinate is selected from the group of alkali metal, alkaline earth metal, zinc, iron and aluminum hydroxy methane sulfinate, in particular alkali metal and alkaline earth metal hydroxyl methane sulfinate and mixtures thereof.

4. The use of any one of claims 1 to 3, wherein the composition comprises a synergistically active amount of the metal sulfite and the metal hydroxymethane sulfinate.

5. The use of any one of the preceding claims, wherein the weight ratio of metal sulfite to metal hydroxymethane sulfinate is in the range of 5:1 to 1:4.

6. The use of claim 5, wherein the weight ratio of metal sulfite to metal hydroxymethane sulfinate is in the range of 4:1 to 1:3.

7. The use of claim 5 or 6, wherein the weight ratio of metal sulfite to metal hydroxymethane sulfinate is in the range of 3:1 to 1:3.

8. The use of any one of the preceding claims, wherein the composition is in the form of an aqueous solution or suspension.

9. The use of any one of claims 1 to 7, wherein the composition is in the form of a solid mixture.

10. The use of claim 9, wherein the composition comprises at least 70 wt. %, in particular at least 80 wt. %, of the mixture of alkali metal sulfite and the alkali metal hydroxymethane sulfinate, based on the total weight of the solid mixture.

11. The use of any one of the preceding claims, wherein the composition comprises sodium sulfite as metal sulfite.

12. The use of any one of the preceding claims, wherein the composition comprises sodium hydroxymethane sulfinate as metal hydroxymethane sulfinate.

13. The use of any one of claims 1 to 12 as reducing agent in the post-polymerization of emulsion polymerizations.

14. A reduction method which comprises adding a composition as defined in any one of claims 1 to 12 to the reaction mixture of an emulsion polymerization.

15. The method of claim 14, wherein the composition is added during the post-polymerization of emulsion polymerizations.

## Patentansprüche

1. Verwendung einer Zusammensetzung, umfassend mindestens ein Metallsulfit und mindestens ein Metall-Hydroxymethansulfinat, wobei das Gewichtsverhältnis von Metallsulfit zu Metall-Hydroxymethansulfinat im Bereich von 10:1 bis 1:10 liegt, als Reduktionsmittel in Emulsionspolymerisationen.

2. Verwendung nach Anspruch 1, wobei das Metallsulfit ausgewählt ist aus der Gruppe von Alkalimetall-, Erdalkalimetall-, Zink-, Eisen- und Aluminiumsulfit, insbesondere Alkalimetall- und Erdalkalimetallsulfit und Gemischen davon.

3. Verwendung nach Anspruch 1 oder 2, wobei das Metall-Hydroxymethansulfinat ausgewählt ist aus der Gruppe von Alkalimetall-, Erdalkalimetall-, Zink-, Eisen- und Aluminium-Hydroxymethansulfinat, insbesondere Alkalimetall- und Erdalkalimetall-Hydroxylmethansulfinat und Gemischen davon.

4. Verwendung nach einem der Ansprüche 1 bis 3, wobei die Zusammensetzung eine synergistisch wirksame Menge des Metallsulfits und des Metall-Hydroxymethansulfinats umfasst.

5. Verwendung nach einem der vorhergehenden Ansprüche, wobei das Gewichtsverhältnis von Metallsulfit zu Metall-Hydroxymethansulfinat im Bereich von 5:1 bis 1:4 liegt.

6. Verwendung nach Anspruch 5, wobei das Gewichtsverhältnis von Metallsulfit zu Metall-Hydroxymethansulfinat im Bereich von 4:1 bis 1:3 liegt.

7. Verwendung nach Anspruch 5 oder 6, wobei das Gewichtsverhältnis von Metallsulfit zu Metall-Hydroxymethansulfinat im Bereich von 3:1 bis 1:3 liegt.

8. Verwendung nach einem der vorhergehenden Ansprüche, wobei die Zusammensetzung in Form einer wässrigen Lösung oder Suspension vorliegt.

9. Verwendung nach einem der Ansprüche 1 bis 7, wobei die Zusammensetzung in Form einer Feststoffmischung vorliegt.

10. Verwendung nach Anspruch 9, wobei die Zusammensetzung mindestens 70 Gew.-%, insbesondere mindestens 80 Gew.-%, des Gemischs aus Alkalimetallsulfit und dem Alkalimetall-Hydroxymethansulfinat, bezogen auf das Gesamtgewicht der Feststoffmischung, umfasst.

11. Verwendung nach einem der vorhergehenden Ansprüche, wobei die Zusammensetzung Natriumsulfit als Metallsulfit enthält.

12. Verwendung nach einem der vorhergehenden Ansprüche, wobei die Zusammensetzung Natrium-Hydroxymethansulfinat als Metall-Hydroxymethansulfinat umfasst.

13. Verwendung nach einem der Ansprüche 1 bis 12 als Reduktionsmittel bei der Nachpolymerisation von Emulsionspolymerisationen.

14. Reduktionsverfahren, bei dem man eine Zusammensetzung nach einem der Ansprüche 1 bis 12 zur Reaktionsmischung einer Emulsionspolymerisation zugibt.

15. Verfahren nach Anspruch 14, bei dem man die Zusammensetzung während der Nachpolymerisation von Emulsionspolymerisationen zugibt.

## Revendications

1. Utilisation d'une composition comprenant au moins un sulfite métallique et au moins un sulfinate d'hydroxyméthane métallique dans laquelle le rapport pondéral du sulfite métallique par rapport au sulfinate d'hydroxyméthane métallique est dans la plage de 10:1 à 1:10, en tant qu'agent réducteur dans des polymérisations en émulsion.

2. Utilisation selon la revendication 1, dans laquelle le sulfite métallique est sélectionné parmi le groupe de : métal alcalin, métal alcalino-terreux, zinc, fer et sulfite d'aluminium, en particulier métal alcalin et sulfite métallique alcalino-terreux et mélanges de ceux-ci.

3. Utilisation selon la revendication 1 ou 2, dans laquelle le sulfinate d'hydroxyméthane métallique est sélectionné parmi le groupe de : métal alcalin, métal alcalino-terreux, zinc, fer et sulfinate d'hydroxyméthane d'aluminium, en particulier métal alcalin et sulfinate d'hydroxylméthane métallique alcalino-terreux et mélanges de ceux-ci.

4. Utilisation selon l'une quelconque des revendications 1 à 3, dans laquelle la composition comprend une quantité active de façon synergique du sulfite métallique et du sulfinate d'hydroxyméthane métallique.

5. Utilisation selon l'une quelconque des revendications précédentes, dans laquelle le rapport pondéral du sulfite métallique par rapport au sulfinate d'hydroxyméthane métallique est dans la plage de 5:1 à 1:4.

6. Utilisation selon la revendication 5, dans laquelle le rapport pondéral du sulfite métallique par rapport au sulfinate d'hydroxyméthane métallique est dans la plage de 4:1 à 1:3.

7. Utilisation selon la revendication 5 ou 6, dans laquelle le rapport pondéral du sulfite métallique par rapport au sulfinate d'hydroxyméthane métallique est dans la plage de 3:1 à 1:3.

8. Utilisation selon l'une quelconque des revendications précédentes, dans laquelle la composition est sous la forme d'une solution ou suspension aqueuse.

9. Utilisation selon l'une quelconque des revendications 1 à 7, dans laquelle la composition est sous la forme d'un mélange solide.

10. Utilisation selon la revendication 9, dans laquelle la composition comprend au moins 70 % en poids, en particulier au moins 80 % en poids, du mélange de sulfite métallique alcalin et du sulfinate d'hydroxyméthane métallique alcalin, sur la base du poids total du mélange solide.

11. Utilisation selon l'une quelconque des revendications précédentes, dans laquelle la composition comprend du sulfite de sodium en tant que sulfite métallique.

12. Utilisation selon l'une quelconque des revendications précédentes, dans laquelle la composition comprend du sulfinate d'hydroxyméthane de sodium en tant que sulfinate d'hydroxyméthane métallique.

13. Utilisation selon l'une quelconque des revendications 1 à 12 en tant qu'agent réducteur dans la post-polymérisation de polymérisations en émulsion.

14. Procédé de réduction qui comprend l'ajout d'une composition telle que définie dans l'une quelconque des revendications 1 à 12 au mélange de réaction d'une polymérisation en émulsion.

15. Procédé selon la revendication 14, dans lequel la composition est ajoutée durant la post-polymérisation de polymérisations en émulsion.
